(19) Europäisches Patentamt
European Patent Office
Office européen des brevets

(11) EP 1 626 307 A1

(12) **EUROPEAN PATENT APPLICATION**
published in accordance with Art. 158(3) EPC

(43) Date of publication:
15.02.2006 Bulletin 2006/07

(51) Int Cl.:
*G02F 1/17* (1974.07)    *G02F 1/167* (1990.01)
*G09F 9/30* (1968.09)    *G09F 9/37* (1980.01)
*G09F 9/00* (1968.09)

(21) Application number: 04734092.2

(22) Date of filing: 20.05.2004

(86) International application number:
PCT/JP2004/006837

(87) International publication number:
WO 2004/104684 (02.12.2004 Gazette 2004/49)

(84) Designated Contracting States:
DE FR

(30) Priority: 22.05.2003 JP 2003145177
05.04.2004 JP 2003110997

(71) Applicant: Bridgestone Corporation
Tokyo 104-8340 (JP)

(72) Inventors:
• TANUMA, Itsuo
Saitama 350-1335 (JP)

• TAMURA, Hajime;
Kanagawa 214-0014; (JP)
• KITA, Shinichi
Minamisaitama-gun,
Saitama 349-0217 (JP)
• NIHEI, Norio
Tokyo 187-0031 (JP)

(74) Representative: Whalley, Kevin
Marks & Clerk
90 Long Acre
London WC2E 9RA (GB)

(54) **IMAGE DISPLAY AND SUBSTRATE JOINING APPARATUS USED FOR PRODUCING SAME**

(57) In an image display device, in which image display media are sealed between opposed substrates, at least one of two substrates being transparent, and, in which the image display media, to which an electrostatic field is applied, are made to move so as to display an image, at least back substrate positioned at a rear side with respect to a visual side is made of a resin material. Moreover, a substrate stacking apparatus is constructed by a reading mechanism for optically reading an alignment mark; a stage for fixing at least one substrate; and a driving mechanism for driving the stage in a horizontal direction (xy direction); wherein the reading mechanism for performing the optical reading is arranged on the stage for fixing a lower substrate.

*FIG. 4*

**Description**

TECHNICAL FIELD

The present invention relates to an image display device, in which image display media are sealed between opposed substrates, at least one of two substrates being transparent, and, in which the image display media, to which an electrostatic field is applied, are made to move so as to display an image.

BACKGROUND ART

As an image display device substitutable for liquid crystal display (LCD), image display devices with the use of technology such as an electrophoresis method, an electro-chromic method, a thermal method, dichroic-particles-rotary method are proposed. In these image display devices, image display media are sealed between opposed substrates, at least one of two substrates being transparent, and, the image display media, to which an electrostatic field is applied, are made to move so as to display an image.

As for these image display devices, it is conceivable as inexpensive visual display device of the next generation from a merit having wide field of vision close to normal printed matter, having smaller consumption with LCD, spreading out to a display for portable device, and an electronic paper is expected.

Recently, electrophoresis method is proposed that micro-encapsulate dispersion liquid made up with dispersion particles and coloration solution and dispose the liquid between faced substrates. However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] This method utilizes a particle behavior in a gas constituted by the substrates and the particles. In this method, since no liquid is used, the problems such as particle sedimentation and agglutination raised in the electrophoresis method can be eliminated.

As mentioned above, in the various image display devices substitutable for the liquid crystal display, it is superior on wide view angle, low power consumption, and image memory property as compared with the LCD. However, it has a tendency, due to its structure, such that a weight becomes heavy and a dimension becomes large. Therefore, also in the various image display devices mentioned above, the requirements for making a weight light and for making a dimension compact are increased recently.

Moreover, as a substrate stacking apparatus used for manufacturing an image display device, in which image display media are sealed between opposed substrates, at least one of two substrates being transparent, and, in which the image display media, to which an electrostatic field is applied, are made to move so as to display an image, wherein one substrate, to which partition walls are formed and in which the image display media are filled and the other substrate are stacked, a substrate stacking apparatus for the LCD was used as it is. However, in the known substrate stacking apparatus for the LCD, since it handles no panel in which the image display media are sealed between the opposed substrates (liquid crystals are filled after stacking the substrates), the substrate stacking apparatus is operated by: fixing a transparent substrate to an upper stage; arranging an optical device for reading an alignment mark at an upper side; and reading the alignment mark of the substrate fixed to the lower stage through the transparent substrate.

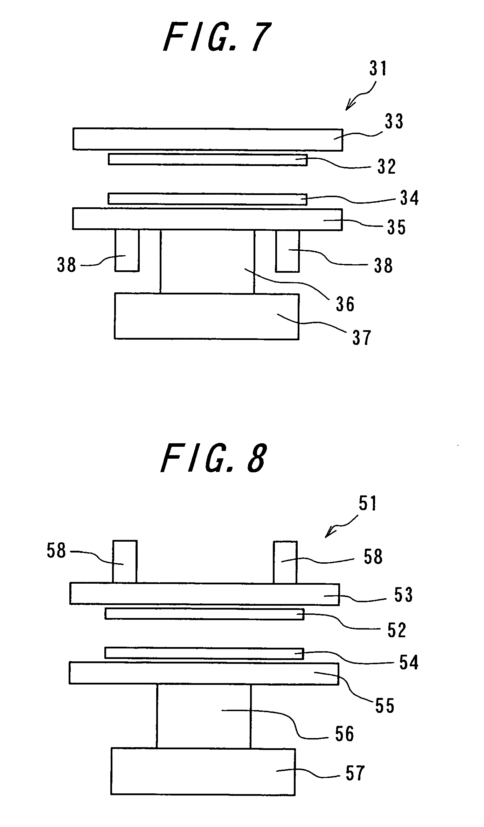

Fig. 8 is a schematic view for explaining one embodiment of the known substrate stacking apparatus for the LCD. In the embodiment shown in Fig. 8, the known substrate stacking apparatus 51 comprises: an upper substrate stage 53 for fixing an upper substrate 52; a lower substrate stage 55 for fixing a lower substrate 54; an XYθ stage driving member 56 for an alignment of the lower substrate stage 55; a stage up and down driving member 57 for moving the lower substrate stage 55 up and down; and an alignment mark reading member 58 arranged on the upper substrate stage 53.

If the substrate stacking apparatus 51 for the LCD having the construction mentioned above is used for stacking the substrates in the step of manufacturing the image display device using the image display media according to the invention, there occurs a leakage of the image display media or an image defect such as unevenness and so on, in the case of using the transparent substrate at an observation side to which partition walls are arranged and in which the image display media are filled. Therefore, the substrate stacking operation is performed under such a condition that the substrate at the observation side, in which the image display media are filled, is arranged at a lower side.

In this case, if a light transmittance of a back substrate 52, to which the image display media are not filled, an alignment can be performed from both sides during an alignment operation, since a light can be transmitted from an upper side of the back substrate 52. However, if a light transmittance of the back substrate 52 is low, the alignment mark of a view side substrate 54 arranged at a lower side is hidden by the back substrate 52 arranged at an upper side, in the substrate stacking apparatus 31 for the LCD shown in Fig. 8, and thus it is not possible to read the alignment mark by the alignment mark reading member 58 arranged at an upper side. Therefore, there arise drawbacks such that the alignment operation can not be performed from an upper side, such that the substrate stacking can not be performed, and, such that it is difficult to manufacture the image display panel having no unevenness and so on.

DISCLOSURE OF INVENTION

An object of the invention is to eliminate the drawbacks mentioned above and to provide an image display device, which can achieve a lightweight body and a compact dimension.

Moreover, another object of the invention is to eliminate the drawbacks mentioned above and to provide a substrate stacking apparatus for stacking the opposed substrates in which a concise positioning can be performed and no defect such as unevenness and so on occurs, even if a light transmittance of the back substrate is low.

According to the invention, an image display device, in which image display media are sealed between opposed substrates, at least one of two substrates being transparent, and, in which the image display media, to which an electrostatic field is applied, are made to move so as to display an image, is characterized in that at least back substrate positioned at a rear side with respect to a visual side is made of a resin material. In the image display device according to the invention, since the back substrate is made of a resin material, it is possible to achieve a lightweight body and a compact dimension.

As a preferred embodiment of the image display device according to the invention, there are cases: such that the resin back substrate is a resin substrate of glass fiber reinforced type; such that the resin back substrate is made of polyamide resin; such that the resin back substrate is a metal laminated resin substrate in which a metal plate is previously adhered; and such that a metal thin film is previously formed on the resin back substrate by utilizing a vacuum technique.

As another preferred embodiment of the image display device according to the invention, in the case that use is made of the resin plate laminated by the metal plate or the metal thin film as the resin back, there are cases: such that, as a material of the metal plate or the metal thin film, use is made of copper, aluminum, nickel, chrome, gold or an alloy obtained by mixing at least two kinds of these metals; and such that, as a material of the metal plate or the metal thin film, use is made of copper, aluminum, nickel, chrome, gold or an alloy obtained by mixing at least two kinds of these metals, and, use is made of a member obtained by laminating the material for the metal plate or the metal thin film to become more than two layers.

As still another embodiment of the image display device according to the invention, in the case that use is made of the resin substrate laminated by the metal plate or the metal thin film, there are cases: such that a predetermined electrode is formed on the substrate by utilizing the metal plate or the metal thin film and by means of a chemical technique such as etching or a physical technique such as cutting or breaking; such that the resin back substrate, in which the metal plate or the metal thin film is laminated, has a multi-layer structure by utilizing through holes; and such that a multi-layered driver and a multi-layered controller, both used for driving the image display media, are stacked on a rear surface of the resin back substrate, in which the metal plate or the metal thin film is laminated.

As still another embodiment of the image display device according to the invention, there are cases: such that an opposite substrate at the visual side is a glass substrate having a transparent conductive layer; such that an opposite substrate at the visual side is a transparent resin substrate having a transparent conductive layer; and such that an image display panel of the image display device is a panel of a segment driving type.

Moreover, according to the invention, a substrate stacking apparatus used for manufacturing an image display device, in which image display media are sealed between opposed substrates, at least one of two substrates being transparent, and, in which the image display media, to which an electrostatic field is applied, are made to move so as to display an image, wherein one substrate, to which partition walls are formed and in which the image display media are filled and the other substrate are stacked, is characterized in that the improvement comprises: a reading mechanism for optically reading an alignment mark; a stage for fixing at least one substrate; and a driving mechanism for driving the stage in a horizontal direction (xy direction); wherein the reading mechanism for performing the optical reading is arranged on the stage for fixing a lower substrate.

As a preferred embodiment of the substrate stacking apparatus according to the invention, there cases: such that the driving mechanism for driving the stage in a horizontal direction (xy direction) is arranged to a side of the stage for fixing the lower substrate; such that the lower substrate is the substrate, to which the partition walls are formed and in which the image display media are filled; and such that a transmission factor of visible light (wavelength: 380 nm - 780 nm) in a base material constituting an upper substrate is not more than 20 %.

BRIEF DESCRIPTION OF DRAWINGS

[Fig. 1] Fig. 1 is a schematic view showing one embodiment of a panel displaying method in an image display device according to the invention.

[Fig. 2] Fig. 2 is a schematic view illustrating one embodiment of a panel structure of the image display device according to the invention.

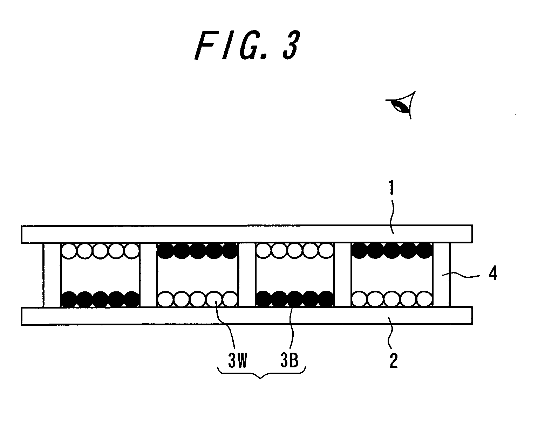

[Fig. 3] Fig. 3 is a schematic view depicting another embodiment of the panel structure of the image display device according to the invention.

[Fig. 4] Figs. 4a and 4b are schematic views respectively showing one embodiment of a back substrate used in the image display device according to the invention.

[Fig. 5] Figs. 5a and 5b are schematic views respectively explaining an effect in the case of using the image display device according to the invention with a segment driving type is used.

[Fig. 6] Fig. 6 is a schematic view illustrating one embodiment of a shape of partition walls in the image display device according to the invention.

[Fig. 7] Fig. 7 is a schematic view explaining one embodiment of a substrate stacking apparatus according to the invention.

[Fig. 8] Fig. 8 is a schematic view explaining one embodiment of a known substrate stacking apparatus according to the invention.

BEST MODE FOR CARRYING OUT THE INVENTION

The image display device according to the invention can take various constructions, if it has a structure such that image display media are sealed between opposed substrates, at least one of two substrates being transparent, and, such that the image display media, to which an electrostatic field is applied, are made to move so as to display an image. For example, use is made of the image display device with the use of a liquid crystal method, an electrophoresis method, an electro-chromic method, a thermal method, dichroic-particles-rotary method, a method of using dry particles moving type or dry liquid powder moving type. Hereinafter, the explanation is made with reference to the dry type image display device using particles or liquid powder.

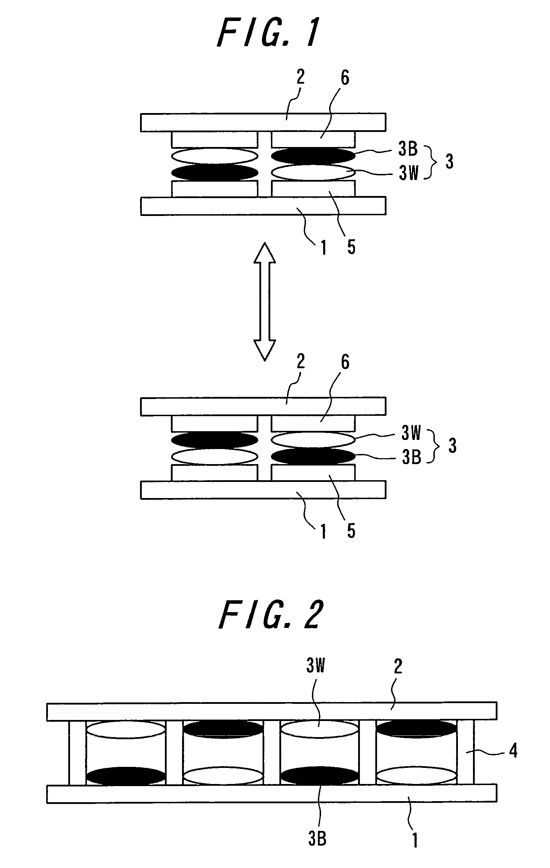

Fig. 1 and Fig. 2 are schematic views showing respectively one embodiment of the image display panel used in the image display device according to the invention. In the image display panel shown in Fig. 1, liquid powders 3 (here, white liquid powder 3W and black liquid powder 3B) are sealed as two groups of image display media having different charge characteristics and different colors between a back substrate 1 and an opposed substrate 2, and, the sealed liquid powders 3, to which an electrostatic field is applied from a back electrode 5 and an opposed electrode 6, are moved in a vertical direction with respect to the back substrate 1 and the opposed substrate 2 so as to display an image. In this method, as shown in Fig. 2, it is possible to another image display device in which a space between the back substrate 1 and the opposed substrate 2 is defined by partition walls 4 so s to form a plurality of cells, and the liquid powders 3 are sealed in the respective cells. The same explanation can be applied, as it is, if the white liquid powder 3W is substituted for white particles and the black liquid powder 3B is substituted for black particles.

The features of the image display device according to the invention are a material and a structure of the image display panel having the construction mentioned above. That is, in the image display panel having the construction mentioned above, the feature is that at least back substrate 1 positioned at an opposite side of the transparent opposed substrate 2 at a visual side among the back substrate 1 and the opposed substrate 2 is made of a resin material. Since use is made of the resin material as the back substrate 1, it is possible to make overall image display device light. Moreover, the lightweight image display device can be obtained, it is possible to make it compact by simplifying the structure of the device such as a case and so on.

As the resin material constituting the back substrate 1, use is made of resins such as epoxy, polyester, nylon, polyimide, polycarbonate and so on, and among them it is preferred to use polyimide. Moreover, it is preferred to use FRP (Fiber Reinforced Plastic) in which theses resins are reinforced by fibers such as glass fiber, carbon fiber and the others, and among them it is more preferred to use FRP reinforce by glass fiber. Further, it is preferred to use a sheet obtained by previously forming these resin materials (including FRP). The thickness of the substrate is preferably 2 to 400 μm, more preferably 5 to 300 μm. When the thickness is too thin, it becomes difficult to maintain strength and distance uniformity between the substrates, and when the thickness is thicker than 400 μm, a bending stress becomes too strong and thus it is inconvenient for electrode connection.

As a structure of the back substrate 1, as shown in Fig. 1 as one embodiment, use is made of a metal laminated resin substrate in which a metal plate constituting the back electrode 5 is previously adhered to the resin substrate made of the resin materials mentioned above. In this case, it is possible to construct the back plate 1 by laminating the metal thin film to the resin substrate previously by means of a vacuum technique such as deposition, sputtering and so on. As a material for the metal plate or the metal thin film, use is made of copper, aluminum, nickel, chrome, gold and an alloy obtained by mixing at least two kinds of these metals. Moreover, the material for the metal plate or the metal thin film is laminated to become more than two layers. Even in the case of forming more than two layers, it is possible to form the predetermined back electrode 5 by means of chemical or physical technique by utilizing the metal plate or the metal thin film. Moreover, after forming the electrode by means of chemical or physical technique, it is possible to further laminate a metal for the purpose of a corrosion proof and so on of the electrode.

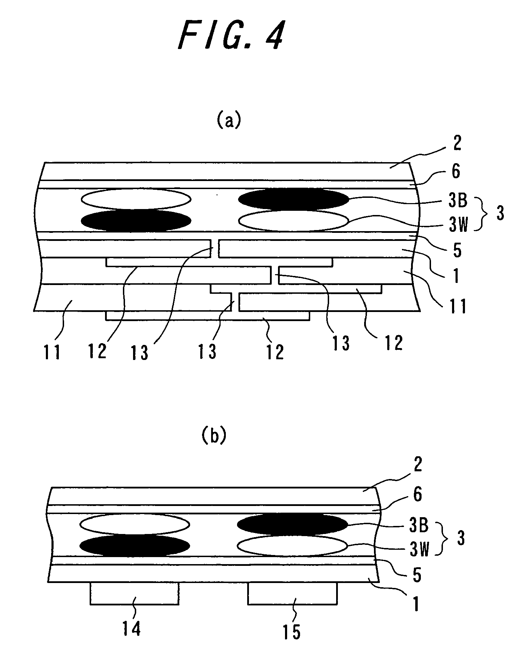

Figs. 4a and 4b are schematic views respectively showing another embodiment of the back substrate used in the image display device according to the invention. In the embodiment shown in Fig. 4a, as another construction of the back substrate 1, in which a resin layer 11 and a metal layer 12 made of the metal plate or the metal thin film are laminated to become more than two layers, lower and upper metal layers 12 are electrically connected via a through hole 13 to achieve the multi-layer construction. Moreover, in the embodiment shown in Fig. 4b, as still another construction of the back substrate 1, a driver 14 and a controller 15, both used for driving the image display device, are stacked integrally on a rear surface of the back substrate 1. Of course, both of the multi-layer construction utilizing the through hole 13 shown in Fig. 4a and the stacked construction of the driver 14 and so on shown in Fig. 4b can be provided at the same time. In these embodiments, in addition to the lightweight body, it is possible to make the overall image display device compact effectively.

Moreover, as a material of the transparent opposed substrate 2 at a visual side, use is made of a film substrate or a sheet substrate made of a glass or a resin material such as polyethylene terephthalate series, polycarbonate series, polyimide series, acrylic series and so on, and among them, it is preferred to use a glass substrate, a polyester series resin substrate or a polycarbonate series resin substrate. Further, as a material of the transparent opposed electrode 6 at a visual side, use is made of a metal or a mixture of at least one kind selected from a group of oxide, nitride, boride and so on. Among them, $In_2O_3+SnO_2$ (common name: ITO) is most generally used.

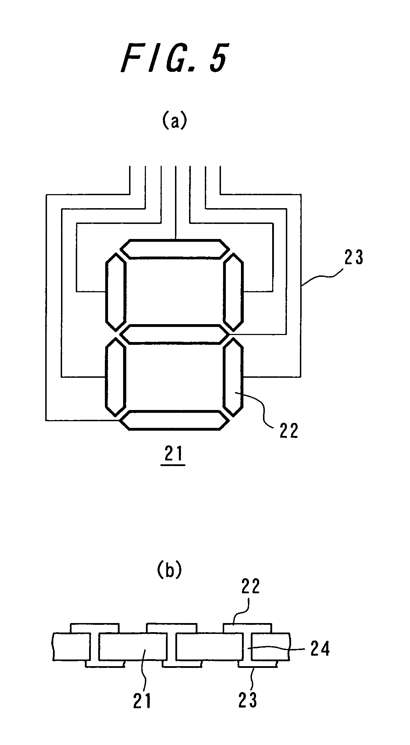

If the image display device comprises the image display panel having the back substrate 1 and the opposed substrate 2 mentioned above, a segment driving method can be used for driving the image display panel. The reason is as follows. That is, as shown in Fig. 5a, if a lead wire 23 from respective segment 22 to the electrode is arranged on a surface of the substrate 21, a portion of the lead wire 23 is displayed. In this case, as shown in Fig. 5b, a hole (through hole 22) is opened at a portion corresponding to the respective segment 22, and the lead wire 23 is transferred and arranged on a rear surface of the substrate 21, so that it is possible to display only the segments.

Hereinafter, in the image display apparatus of dry type utilizing the particles or the liquid powders as the image display media according to the invention, liquid powders, particles, common members will be explained in this order.

In the present invention, a term "liquid powder" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powder.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the image display device according to the invention, a solid material is used as a dispersant.

The image display panel which is a target of the present invention has a construction such that the liquid powder composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage.

As mentioned above, the liquid powders means an intermediate material having both of liquid properties and particle properties and exhibiting a self-fluidity without utilizing gas force and liquid force. Such liquid powders become particularly an aerosol state. In the image display device according to the invention, the liquid powders used in a state such that a solid material is relatively and stably floating as a dispersoid in a gas.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult.

On the other hand, if the apparent volume in the maximum floating state is larger than 12 times, a handling inconvenience during a liquid powder filling operation into the device such as a particle over-scattering occurs. That is, it is measured by filling the liquid powder in a transparent closed vessel through which the liquid powder is seen; vibrating or dropping the vessel itself to obtain a maximum floating state; and measuring an apparent volume at that time from outside of the vessel. Specifically, the liquid powder having a volume 1/5 of the vessel is filled as the liquid powder in a vessel with a polypropylene cap having a diameter (inner diameter) of 6 cm and a height of 10 cm (product name I-boy produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, in the image display panel according to the invention, it is preferred that a time change of the apparent volume of the liquid powder satisfies the following formula:

$$V_{10}/V_5 > 0.8;$$

here, $V_5$ indicates the apparent volume (cm$^3$) of the liquid powder after 5 minutes from the maximum floating state; and $V_{10}$ indicates the apparent volume (cm$^3$) of the liquid powder after 10 minutes from the maximum floating state. In this case, in the image display panel according to the invention, it is preferred to set the time change $V_{10}/V_5$ of the apparent volume of the liquid powder to larger than 0.85, more preferably larger than 0.9, most preferably larger than 0.95. If the time change $V_{10}/V_5$ is not larger than 0.8, the liquid powder is substantially equal to normal particles, and thus it is not possible to maintain a high speed response and durability according to the invention.

Moreover, it is preferred that the average particle diameter d(0.5) of the particle materials constituting the liquid powder is 0.1 - 20 μm, more preferably 0.5 - 15 μm, most preferably 0.9 - 8 μm. If the average particle diameter d(0.5) is less than 0.1 μm, a display controlling becomes difficult. On the other hand, if the average particle diameter d(0.5) is larger than 20 μm, a display is possible, but opacifying power is decreased and thus a thin shape device is difficult. Here, the average particle diameter d(0.5) of the particle materials constituting the liquid powder is equal to d(0.5) in the following particle diameter distribution Span.

It is preferred that particle diameter distribution Span of the particle material constituting the liquid powder, which is defined by the following formula, is not more than 5 preferably not more than 3:

Particle diameter distribution: Span = (d(0.9) - d(0.1))/d(0.5) ; here, d(0.5) means a value of the particle diameter expressed by μm wherein an amount of the particle material constituting the liquid powder having the particle diameter larger than this value is 50% and an amount of the particle material constituting the liquid powder having the particle diameter expressed by μm wherein an amount of the particle material constituting the liquid powder having a particle diameter smaller than this value is 10%, and d(0.9) means a value of the particle diameter expressed by μm wherein an amount of the particle material constituting the liquid powder having the particle diameter smaller than this value is 90%. If the particle diameter distribution Span of the particle materials constituting the liquid powder is set to not more than 5, the particle diameter becomes even and it is possible to perform an even liquid powder movement.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The liquid powder may be formed by mixing necessary resin, charge control agent, coloring agent, additive and so on and grinding them, or, by polymerizing from monomer, or, by coating a particle with resin, charge control agent, coloring agent, and additive and so on. Hereinafter, typical examples of resin, charge control agent, coloring agent, additive and so on constituting the liquid powder will be explained.

Typical examples of the resin include urethane resin, acrylic resin, polyester resin, acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers are preferred.

Examples of the electric charge control agent include, positive charge control agent including the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of organic or inorganic pigments or dye are employable. For example, use is made of Nigrosine, Methylene Blue, quinoline yellow, rose Bengal and so on.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Prussian blue, Ultramarine blue, cobalt blue, cobalt green, cobalt violet, ion oxide, carbon black, manganese ferrite black, cobalt ferrite black, copper powder, aluminum powder.

However, if the above materials are only mixed or coated with no contrivance, the liquid powder exhibiting an aerosol state cannot be obtained. The regular method of forming the liquid powder exhibiting an aerosol state is not defined, but the following method is preferably used.

At first, inorganic fine particles having an average particle size of 20 - 100 nm preferably 20 - 80 nm are preferably fixed on a surface of materials constituting the liquid powder. Moreover, it is preferred that the inorganic fine particles are made of tow or more groups of fine particles. Further, it is preferred to treat the inorganic fine particles by silicone oil. Here, as for the inorganic fine particles, use may be made of silicon dioxide (silica), zinc oxide, aluminum oxide, magnesium oxide, cerium oxide, ferric oxide, copper oxide and so on. In this case, a method of fixing the inorganic fine particles is important. For example, use may be made of hybridizer (NARA Machinery Industry Co., Ltd.) or mechano-fusion (Hosokawa Micron Co., Ltd.) , and the liquid powder showing an aerosol state is formed under a predetermined condition (for example processing time).

Here, in order to further improve a repeating durability, it is effective to control a stability of the resin constituting the liquid powder, especially, a water absorbing rate and a solvent insoluble rate. It is preferred that the water absorbing rate of the resin constituting the liquid powder sealed between the substrates is not more than 3 wt % especially not more than 2 wt %. In this case, a measurement of the water absorbing rate is performed according to ASTM-D570 and a measuring condition is 23°C for 24 hours. As for the solvent insoluble rate of the liquid powder, it is preferred that a solvent insoluble rate of the liquid powder, which is defined by the following formula, is not less than 50% more preferably not less than 70%:

$$\text{solvent insoluble rate (\%)} = (B/A) \times 100;$$

(here, A is a weight of the liquid powder before being immersed into the solvent and B is a weight of resin components after the liquid powder are immersed into good solvent at 25°C for 24 hours).

If the solvent insoluble rate is less than 50%, a bleed is generated on a surface of the particle materials constituting the liquid powder when maintaining for a long time. In this case, it affects an adhesion power with the liquid powder and prevents a movement of the liquid powder. Therefore, there is a case such that it affects a durability of the image display. Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

Then, the particles as the image display media used in the image display device according to the invention will be explained. In the particles, charge control agent, coloring agent, inorganic additives and so on are included in a resin as a main ingredient. Hereinafter, resin, charge control agent, coloring agent, the other additives will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, C.I. pigment yellow 12.

Examples of green pigments include chrome green, chromium oxide, pigment green B, Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Further, examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Prussian blue, Ultramarine blue, cobalt blue, cobalt green, cobalt violet, ion oxide, carbon black, manganese ferrite black, cobalt ferrite black, copper powder, aluminum powder.

These coloring agents may be used alone or in combination of two or more kinds thereof. Particularly, carbon black is preferable as the black coloring agent, and titanium oxide is preferable as the white coloring agent.

Moreover, it is preferred to set the average particle diameter of the particles according to the invention d(0.5) to 0.1 - 50 μm, and to make the particles even and regulated shapes. If the average particle diameter exceeds this range, the image clearness sometimes deteriorated, and, if the average particle size is smaller than this range, an agglutination force between the particles becomes larger and the movement of the particles is prevented.

Further, in the present invention, as for the particle diameter distribution of respective particles, it is preferred that particle diameter distribution Span of the particles, which is defined by the following formula, is not more than 5 preferably not more than 3:

$$\text{Span} = (d(0.9) - d(0.1))/d(0.5) ;$$

(here, d(0.5) means a value of the particle size expressed by μm wherein an amount of the particles having the particle size larger than or smaller than this value is 50%, d(0.1) means a value of the particle size expressed by μm wherein an amount of the particles having the particle size smaller than this value is 10%, and d(0.9) means a value of the particle size expressed by μm wherein an amount of the particles having the particle size smaller than this value is 90%).

If the particle size distribution Span of the particles is set to not more than 5, the particle size becomes even and it is possible to perform an even particle movement.

Further, as a correlation between the particles, it is preferred to set a ratio of d(0.5) of the particles having smallest diameter with respect to d(0.5) of the particles having largest diameter to not more than 50 preferably not more than 10. Even if the particle diameter distribution Span is made smaller, the particles having different charge properties with each other are moved in the opposite direction. Therefore, it is preferred that the particle diameters are formed closely with each other and equivalent amounts of the particles are easily moved in the opposite direction. To this end, the above range is obtained.

Here, the particle diameter distribution and the particle diameter mentioned above can be measured by means of a laser diffraction/ scattering method. When a laser light is incident upon the particles to be measured, a light intensity distribution pattern due to a diffraction/scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the particles is properly depend upon the measuring condition. However, it is understood that the charge amount of the particles used for the image display media in the image display panel is substantially depend upon an initial charge amount, a contact with respect to the partition wall, a contact with respect to the substrate, a charge decay due to an elapsed time, and specifically a saturation value of the particles during a charge behavior is a main factor.

After various investigations of the inventors, it is fond that an adequate range of the charged values of the particles used for the image display media can be estimated by performing a blow-off method utilizing the same carrier particles so as to measure the charge amount of the particles.

Moreover, as a filling amount of the image display media (the particles or the liquid powder), it is preferred to control a volume occupied rate of the image display media in a space between the opposed substrates to 5 - 70 vol %, more preferably 5 - 60 vol %. If the volume occupied rate of the image display media exceeds 70 vol %, the particles become difficult to move, and if it is less than 5 vol %, a clear image display is not performed. Here, the space means a volume, in which the image display media (the particles or the liquid powder) can be filled, defined by substituting an occupied portion of the partition wall 4 and a device seal portion from a portion between the opposed substrate 1 and substrate 2.

Then, the partition wall 4 arranged according to need will be explained.
The shape of the partition wall 4 according to the invention is suitably designed in accordance with a kind of the image display media used for the display and is not restricted. However, it is preferred to set a width of the partition wall to 10 - 1000 μm more preferably 10 - 500 μm and to set a height of the partition wall to 10 - 500 μm more preferably 10 - 200 μm.

Moreover, as a method of forming the partition wall, use may be made of a double rib method wherein ribs are formed on the opposed substrates respectively and they are connected with each other and a single rib method wherein a rib is formed on one of the opposed substrates only. The present invention may be preferably applied to both methods mentioned above.

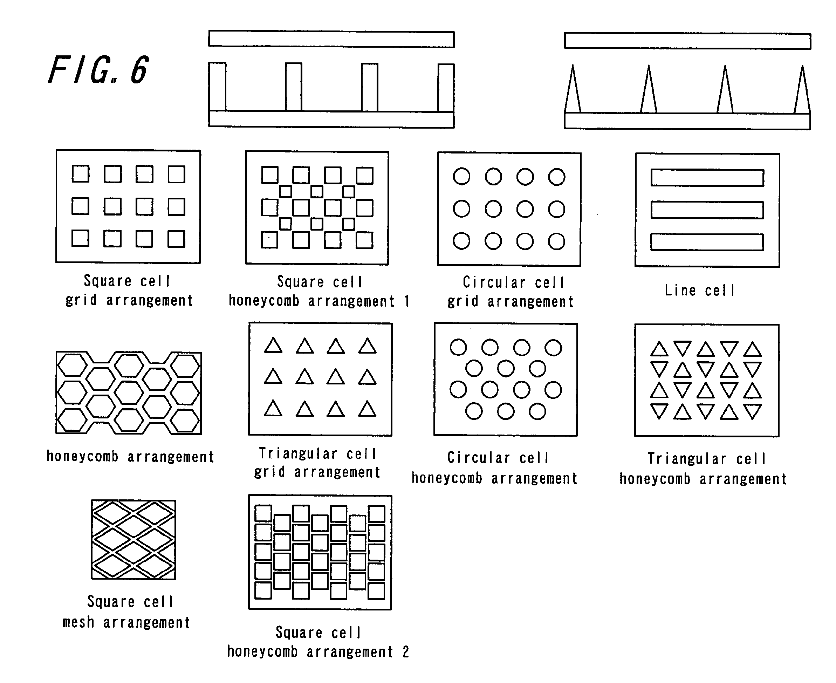

The display cell formed by the partition walls each made of rib has a square shape, a triangular shape, a line shape, a circular shape and a hexagon shape, and has an arrangement such as a grid, a honeycomb and a mesh, as shown in Fig. 6 viewed from a plane surface of the substrate.

It is preferred that the portion corresponding to a cross section of the partition wall observed from the display side (an area of the frame portion of the display cell) should be made as small as possible. In this case, a clearness of the image display can be improved.

Here, the formation method of the partition wall is not particularly restricted, however, a screen-printing method, a sandblast method, a photolithography method and an additive method.

Then, a substrate stacking apparatus will be explained.

Fig. 7 is a schematic view for explaining one embodiment of the substrate stacking apparatus according to the invention. In the embodiment shown in Fig. 7, the substrate stacking apparatus 31 comprises: an upper substrate stage 33 for fixing an upper substrate 32; a lower substrate stage 35 for fixing a lower substrate 34; an XYθ stage driving member 36 for an alignment of the lower substrate stage 35; a stage up and down driving member 37 for moving the lower substrate stage 35 up and down; and an alignment mark reading member 38 arranged to the lower substrate stage 35.

According to the substrate stacking apparatus 31 having the construction mentioned above, in the case such that, as the lower substrate 34, use is made of the transparent opposed substrate 2 to which the partition walls 4 are arranged and in which the image display media are filled, and, as the upper substrate 32, use is made of the back substrate 1 having a low light transmittance of visible light (wavelength: 380 nm - 780 nm) and in which no image display media are filled, it is possible to read the alignment mark of the back substrate 1 through the opposed substrate 2. Therefore, if a light transmittance of the back substrate 1 is low, it is possible to perform the substrate stacking between two substrates precisely and evenly.

INDUSTRIALLY APPLICABILITY

The image display device according to the invention is applicable to the image display unit for mobile equipment such as notebook personal computers, PDAs, cellular phones and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric POP, electric advertisement, electric price tag, electric musical score, RF-ID device and so on.

**Claims**

1. An image display device, in which image display media are sealed between opposed substrates, at least one of two substrates being transparent, and, in which the image display media, to which an electrostatic field is applied, are made to move so as to display an image, **characterized in that** at least back substrate positioned at a rear side with respect to a visual side is made of a resin material.

2. The image display device according to claim 1, wherein the image display media are formed by at least two groups of particles or liquid powder having different charge characteristics and different colors.

3. The image display device according to claim 1 or 2, wherein the resin back substrate is a resin substrate of glass fiber reinforced type.

4. The image display device according to claim 1 or 2, wherein the resin back substrate is made of polyamide resin.

5. The image display device according to one of claims 1 - 4, wherein the resin back substrate is a metal laminated resin substrate in which a metal plate is previously adhered.

6. The image display device according to one of claims 1 - 4, wherein a metal thin film is previously formed on the resin back substrate by utilizing a vacuum technique.

7. The image display device according to claim 5 or 6, wherein, as a material of the metal plate or the metal thin film, use is made of copper, aluminum, nickel, chrome, gold or an alloy obtained by mixing at least two kinds of these metals.

8. The image display device according to claim 5 or 6, wherein, as a material of the metal plate or the metal thin film, use is made of copper, aluminum, nickel, chrome, gold or an alloy obtained by mixing at least two kinds of these metals, and, use is made of a member obtained by laminating the material for the metal plate or the metal thin film to become more than two layers.

9. The image display device according to one of claims 5 - 8, wherein a predetermined electrode is formed on the substrate by utilizing the metal plate or the metal thin film and by means of a chemical technique or a physical technique.

10. The image display device according to one of claims 5 - 9, wherein the resin back substrate, in which the metal plate or the metal thin film is laminated, has a multi-layer structure by utilizing through holes.

11. The image display device according to one of claims 5 - 10, wherein a multi-layered driver and a multi-layered controller, both used for driving the image display media, are stacked on a rear surface of the resin back substrate, in which the metal plate or the metal thin film is laminated.

12. The image display device according to one of claims 1 - 11, wherein an opposite substrate at the visual side is a glass substrate having a transparent conductive layer.

13. The image display device according to one of claims 1 - 11, wherein an opposite substrate at the visual side is a transparent resin substrate having a transparent conductive layer.

14. The image display device according to one of claims 1 - 13, wherein an image display panel of the image display device is a panel of a segment driving type.

**15.** A substrate stacking apparatus used for manufacturing an image display device, in which image display media are sealed between opposed substrates, at least one of two substrates being transparent, and, in which the image display media, to which an electrostatic field is applied, are made to move so as to display an image, wherein one substrate, to which partition walls are formed and in which the image display media are filled and the other substrate are stacked, **characterized in that** the improvement comprises: a reading mechanism for optically reading an alignment mark; a stage for fixing at least one substrate; and a driving mechanism for driving the stage in a horizontal direction (xy direction); wherein the reading mechanism for performing the optical reading is arranged on the stage for fixing a lower substrate.

**16.** The substrate stacking apparatus according to claim 15, wherein the driving mechanism for driving the stage in a horizontal direction (xy direction) is arranged to a side of the stage for fixing the lower substrate.

**17.** The substrate stacking apparatus according to claim 15 or 16, wherein the lower substrate is the substrate, to which the partition walls are formed and in which the image display media are filled.

**18.** The substrate stacking apparatus according to one of claims 15 - 16, wherein a transmission factor of visible light (wavelength: 380 nm - 780 nm) in a base material constituting an upper substrate is not more than 20 %.

## FIG. 1

## FIG. 2

# F I G. 3

# FIG. 4

(a)

(b)

# FIG. 5

(a)

23

22

21

(b)

22

24

21    23

# FIG. 6

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

EP 1 626 307 A1

*FIG. 7*

*FIG. 8*

## INTERNATIONAL SEARCH REPORT

| | International application No. |
|---|---|
| | PCT/JP2004/006837 |

**A. CLASSIFICATION OF SUBJECT MATTER**
Int.Cl$^7$ G02F1/17, G02F1/167, G09F9/30, G09F9/37, G09F9/00

According to International Patent Classification (IPC) or to both national classification and IPC

**B. FIELDS SEARCHED**

Minimum documentation searched (classification system followed by classification symbols)
Int.Cl$^7$ G02F1/17, G02F1/167, G09F9/30, G09F9/37, G09F9/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-91024 A (Fuji Xerox Co., Ltd.),<br>28 March, 2003 (28.03.03),<br>Par. Nos. [0035], [0047]<br>(Family: none) | 1,4,9,14<br>2,3,5,6-8,<br>10-13 |
| Y<br>Y | JP 1-36224 Y2 (Asahi Glass Co., Ltd.),<br>02 November, 1989 (02.11.89),<br>Claim 1; column 4, lines 24 to 30<br>Column 2, lines 2 to 16; column 5, line 22<br>to column 6, line 1<br>(Family: none) | 3<br>10,11 |
| Y | JP 11-265006 A (Affinity Co., Ltd.),<br>28 September, 1999 (28.09.99),<br>Par. No. [0021]<br>& EP 878296 A2<br>column 11, line 46 to column 12, line 7 | 5-8 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>11 August, 2004 (11.08.04) | Date of mailing of the international search report<br>31 August, 2004 (31.08.04) |
|---|---|
| Name and mailing address of the ISA/<br>Japanese Patent Office | Authorized officer |
| Facsimile No. | Telephone No. |

Form PCT/ISA/210 (second sheet) (January 2004)

INTERNATIONAL SEARCH REPORT

| International application No. |
| --- |
| PCT/JP2004/006837 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP 60-150508 A (NISSHA Printing Co., Ltd.),<br>08 August, 1985 (08.08.85),<br>Page 4, lower left column, lines 2 to 12<br>& US 4663192 A<br>column 4, lines 49 to 60 | 1<br>6-8 |
| X<br>Y | JP 2002-202531 A (Fuji Xerox Co., Ltd.),<br>19 July, 2002 (19.07.02),<br>Par. Nos. [0050] to [0055]<br>& US 2002/126067 A1<br>Par. Nos. [0068] to [0073] | 1,2<br>12,13 |
| Y | JP 2002-40465 A (Seiko Epson Corp.),<br>06 February, 2002 (06.02.02),<br>Par. Nos. [0018] to [0027]<br>(Family: none) | 10,11 |
| X<br>Y | JP 2003-140202 A (Seiko Epson Corp.),<br>14 May, 2003 (14.05.03),<br>Par. No. [0020]<br>& US 2003/86149 A1<br>Par. Nos. [0042], [0043] | 1<br>7,8 |

Form PCT/ISA/210 (continuation of second sheet) (January 2004)

| INTERNATIONAL SEARCH REPORT | International application No. |
|---|---|
| | PCT/JP2004/006837 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
```
   Claims 1-14 relate to an image display whose back substrate is composed
of a resin material.
   Claims 15-18 relate to a substrate joining apparatus used for producing
image displays.
```

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-14

**Remark on Protest**      ☐ The additional search fees were accompanied by the applicant's protest.

☐ No protest accompanied the payment of additional search fees.

Form PCT/ISA/210 (continuation of first sheet (2)) (January 2004)